# EUROPEAN PATENT SPECIFICATION

(11) **EP 1 141 863 B1**
(45) Date of publication and mention of the grant of the patent: **11.08.2004**
(21) Application number: 99966487.3
(22) Date of filing: 17.12.1999
(51) Int. Cl.: G06F 17/22

(54) **A SYSTEM AND METHOD FOR AUTHORING, DISTRIBUTING AND REPLAYING DERIVATIVE HYPERMEDIA CONTENT**
SYSTEM ZUM ERSTELLEN, VERSENDEN UND WIEDERGEBEN VON ABGELEITETEN HYPERMEDIA-INHALTEN
SYSTEME ET METHODE DE CREATION, DE DISTRIBUTION ET DE RESTITUTION DE CONTENU HYPERMEDIA DERIVE

(30) Priority: 18.12.1998 US 215713
(43) Date of publication of application: 10.10.2001
(73) Proprietor: SIEMENS CORPORATE RESEARCH, INC., Princeton, New Jersey 08540 (US)
(72) Inventor: WYNBLATT, Michael, Robbinsville, NJ 08691 (US); PIZANO, Arturo, Belle Mead, NJ 08502 (US); HSU, Arding, Kendall Park, NJ 08824 (US); BENSON, Daniel, C., Seattle, WA 98155 (US); SASTRY, Chellury, R., Plainsboro, NJ 08536 (US); AGRAWALA, Vivek, US/ Princeton Junction, NJ 08550 (US)
(74) Representative: Allen, Derek
(86) International application number: PCT/US1999/030399
(87) International publication number: WO 2000/036528

(56) References cited:
- EP-A- 0 762 297
- SASTRY ET AL: "WEBTOUR: A SYSTEM TO RECORD AND PLAYBACK DYNAMIC MULTIMEDIA ANNOTATIONS ON WEB DOCUMENT CONTENT" PROCEEDINGS OF THE SEVENTH ACM INTERNATIONAL CONFERENCE (PART 2) ON MULTIMEDIA, 30 October 1999 (1999-10-30) - 5 November 1999 (1999-11-05), pages 175-178, XP002140678 Orlando, FL, US
- RÖSCHEISEN ET AL: "Beyond browsing: shared comments, SOAPS, trails and on-line communities" COMPUTER NETWORKS AND ISDN SYSTEMS, vol. 27, 1995, pages 739-749, XP004013176 Amsterdam, NL
- JÜHNE ET AL: "Ariadne: A Java-based guided tour system for the World Wide Web" COMPUTER NETWORKS AND ISDN SYSTEMS, vol. 30, no. 1-7, April 1998 (1998-04), pages 131-139, XP004121433 Amsterdam, NL
- TRIGG: "Guided Tours and Tabletops: Tools for Communicating in a Hypertext Environment" ACM TRANSACTIONS ON INFORMATION SYSTEMS, vol. 6, no. 4, 1988, pages 398-414, XP002140679 US
- NICOL ET AL: "Footsteps: Trail-blazing the Web" COMPUTER NETWORKS AND ISDN SYSTEMS, vol. 27, no. 6, 1995, pages 879-885, XP004013190 Amsterdam, NL
- LALIBERTE ET AL: "A protocol for scalable group and public annotations" COMPUTER NETWORKS AND ISDN SYSTEMS, vol. 27, 1995, pages 911-918, XP004013194 Amsterdam, NL

## Description

The present invention relates to the field of information processing on a network such as the World Wide Web (WWW) and, more specifically, to authoring, distributing, and replaying derivative hypermedia content.

As the World Wide Web (WWW) becomes a more significant information source, there is an increasing need to share and reuse WWW information.

It is herein recognized as being desirable that a WWW user should be enabled to place annotations on WWW documents. There are prior art systems which allow certain kinds of annotations to be placed on WWW documents. The well-known Mosaic browser allows annotation of static text to a WWW document. However, this system has the limitation that the annotation was stored along with the document, and thus required the permission of the document owner to create an annotation. This prevented annotation on arbitrary pages as permission was typically not forthcoming, and it also resulted in security risks for the document owners who did grant permission. It also prevented users from having private annotations on a document.

Other systems, such as the ViewDirector Prism system, from TMS Sequoia, and the HotOffTheWeb system from Insight Development, allow graphical annotation on WWW documents. However, these annotations are static in nature, meaning that there is no timing or navigation information stored with them. Such a system cannot easily be used to author a tour through several pages as is herein recognized to be desirable. Moreover, these systems do not support voice annotation.

The article by Roscheisen et al entitled "Beyond browsing: shared comments, SOAPS, trails and on-line communities", Computer Networks and ISDN Systems, vol. 27, 1995, pages 739 to 749 discloses a system for authoring, distributing and playing back static annotations.

A natural mechanism for explanation or exposition is the so-called dynamic annotation, such as is described for image data in U.S. Patent No. 5,838,313, issued 17-Nov- 1998 in the names of Hou, Tai-Yuan et al. (Siemens Docket #95P7547). Briefly, that application discloses a multimedia-based reporting system which utilizes a command interpreter to receive inputs from a user and forwards the inputs to an open report handler, a save report handler, a delete current report handler, a mail report handler, a static annotation handler, a dynamic annotation handler including a recording and playback handler, an annotation on annotation handler, an attach media handler and a print report handler. Most relevantly to the current invention, the dynamic annotation handler allows the individual to record/playback annotations from the user input

Creating an annotation involves recording the mouse gestures, drawings, and voice of the annotation author, along with timing information, so that the annotation can be later replayed in just the way that the author created it Unlike the Mosaic, Prism, and Sequoia systems mentioned above, users of a dynamic annotation system could see the graphical annotations unfold in time with the comments of the author.

According to a first aspect of the present invention there is provided a system for authoring, distributing, and replaying derivative hypermedia content, said system comprising: an authoring system for recording dynamic annotations comprising hypermedia browser navigation events authored on an electronic document; a distribution system for distributing said dynamic annotations which have been recorded by the authoring system; and a playing system for playing said dynamic annotations which have been distributed by the distribution system on said electronic document.

According to a second aspect of the present invention there is provided a method of authoring, distributing and replaying derivative hypermedia content, the method comprising: recording dynamic annotations comprising hypermedia browser navigation events authored on an electronic document; distributing said dynamic annotations which have been recorded in the recording step; and playing said dynamic annotations which have been distributed in said distributing step on said electronic document

In accordance with an embodiment of the present invention, there is provided a tool which allows a WWW user to author a new kind of WWW content which is derivative from existing WWW documents. A user is able to add annotations to WWW documents, and record a "guided tour" through a series of WWW documents. The resulting tour is a combination of the existing WWW documents, the ordering and timing introduced by the author, and the author's annotations.

In accordance with the invention, the idea of dynamic annotation is extended to also record navigation events. In this way, hypermedia documents can be toured in an annotation.

The present invention may be implemented as a multimedia based system for authoring, distributing, and replaying derivative hypermedia content, including a tool which, for example, allows a WWW user to author a new kind of WWW content which is derivative from existing WWW documents.

In accordance with an embodiment of the invention, there are primarily three components to the system: an authoring system for recording dynamic annotations on hypermedia, a distribution system for distribution of those annotations, and a playing system for playing those annotations. The authoring and playing systems are comprised in a hypermedia browser, while the distribution system is partly comprised in the browser and partly in a special remote server. The part of the distribution system within the browser is called the annotation manager, and the remote server is called the annotation server.

preferred embodiments of the present invention integrate the idea of dynamic annotation with a hypermedia browser such as a WWW browser. A traditional hypermedia browser is augmented with systems for recording, distributing, and playing dynamic annotations of hypermedia documents. The invention generates new opportunities for creating and sharing derivative content from hypermedia sources such as the WWW.

The invention will be more fully understood from the following detailed description of the preferred embodiments, in conjunction with the drawings, in which:
Figure 1 shows the overall architecture of the system, as implemented for use with the WWW;
Figure 2 shows a layout of an embodiment in accordance with the present invention; Figure 3 shows the flow of control of a hypermedia browser in accordance with the present invention;
Figure 4 shows the operation of the system in accordance with the present invention in annotation mode;
Figure 5, in reference to a system in accordance with the invention, shows the operation of the annotation distribution system for the storing of an annotation;
Figure 6, in reference to a system in accordance with the invention, shows the operation of the annotation distribution system for the alerting users of the presence of annotations; and
Figure 7 shows the operation of the system in accordance with the present invention, during annotation playback.

As the most widely used form of hypermedia is the WWW, embodiments of the invention will be illustratively described herein in terms of the WWW, although the concepts and general design are fully applicable to any hypermedia system.

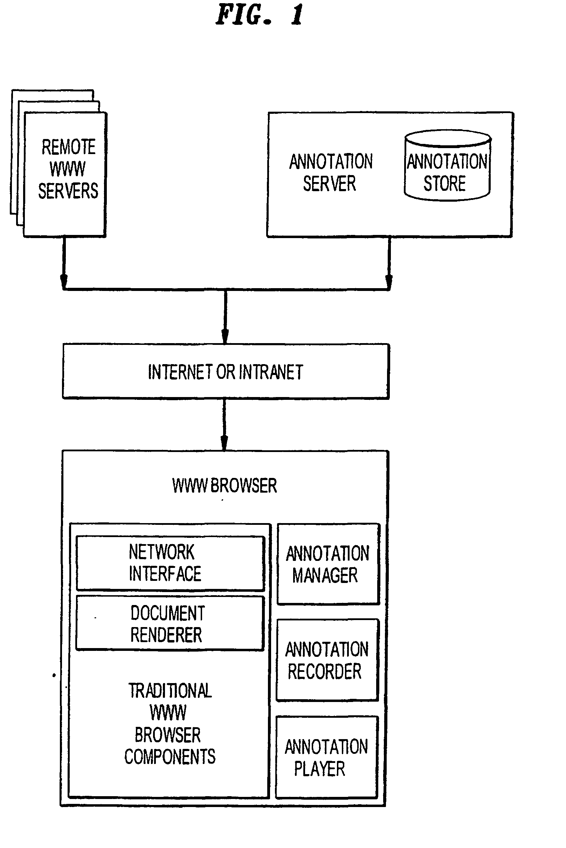

Figure 1 shows the overall architecture of the system, as implemented for use with the WWW.

A traditional WWW browser has several components, notably a network interface which can access documents from remote sites on the network using well-known protocols such as HTTP, and a document renderer which converts structured documents into a form which is understandable by a user. These components are widely available for incorporation into extended systems, as for example from the FastNet ActiveX component set from NetMasters LLC. To allow the users to access the new features of the current invention, several new user-interface objects are added. Each of these objects is described with the relevant new component.

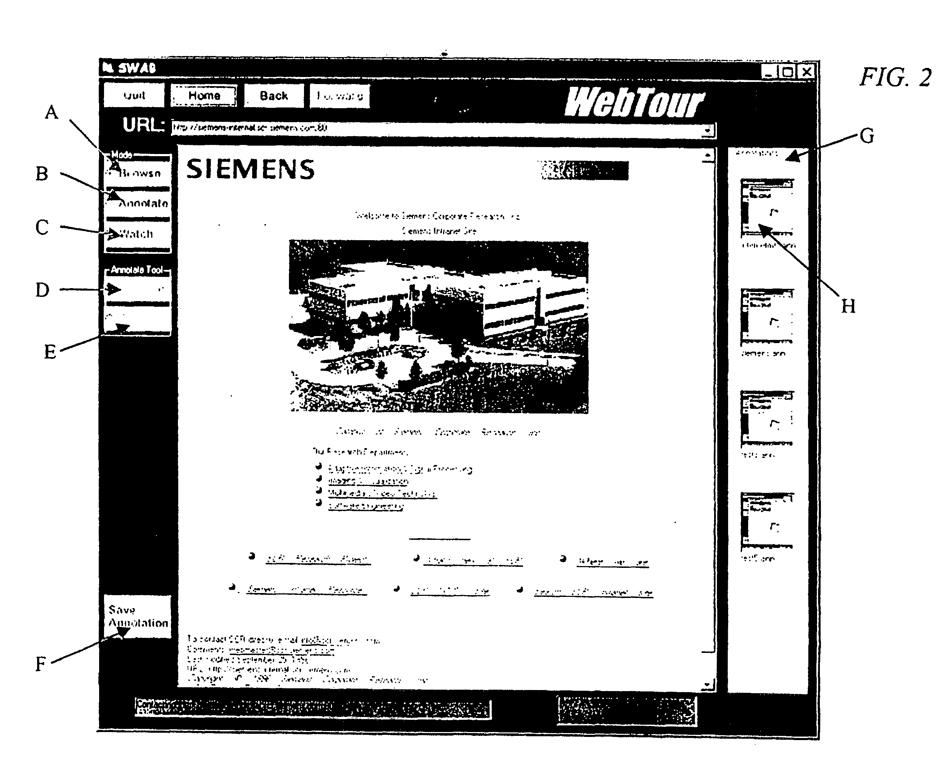

Figure 2 shows a layout of a typical instance of this invention, with the new user interface objects indicated.

The invention described in the afore-mentioned U.S. Patent No. 5,838,313 allows the user to author dynamic annotations on electronic documents. The present invention allows the user to author annotations within a program for browsing hypermedia and furthermore exhibits three novel features: the capture and recording of navigation events, the capability to include multiple documents within an annotation, and the capability to insert hyperlinks to existing annotations.

On pages 8 and 9 of the afore-mentioned U.S. Patent No. 5,838,313, a list is provided of "significant events" which are to be recorded in the annotation. Briefly, it is therein stated, in the context of events recorded during recording that two types of discrete events are included, the user-activated events and the time-sliced events. The user-activated events, of concern herein, have the format (event_name, time, parameters). Events were described therein for many typical user-activated events such as moving a user-interface object on the screen, changing the color of some text, erasing a graphic, etc.

In accordance with the described embodiment of the present invention, the list of significant events is extended to include the following navigation events, which are common in hypermedia browsers:
- following a hyperlink
- invoking "forward", "back", "refresh'', or "home" browser commands
- jumping to a document through the use of a history list
- jumping to a document by invoking a "bookmark"
- scrolling the document in the viewable area

As with other events described in the afore-mentioned U.S. Patent No. 5,838,313, in accordance with the described embodiment of the present invention, each event is stored as (event_name, time, parameters). The first four navigation events are all stored with the event_name NEW_DOCUMENT, and with a single parameter that stores the target document ID. Normally, this ID uniquely identifies the document. In the case of WWW documents, the Universal Resource Locator (URL) serves as the ID. The scrolling events are stored as with the event name SCROLL and have one parameter to indicate the scrolling direction (left, right, up or down), and a second parameter to indicate the magnitude of the scroll.

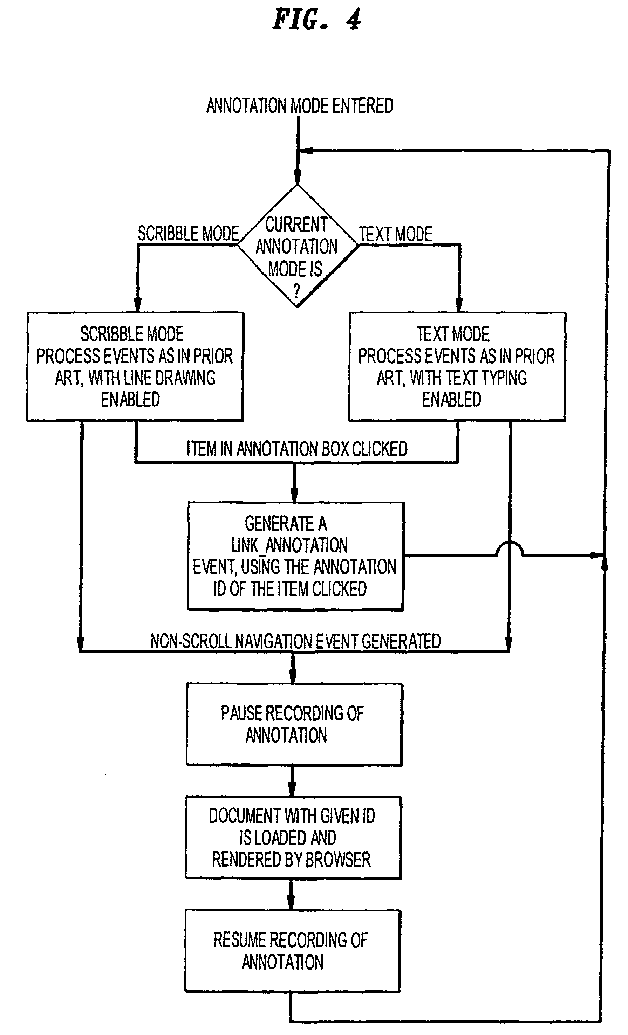

Figure 4 shows the operation of the system in accordance with the present invention in annotation mode. During the authoring of an annotation, the occurrence of a navigation event other than a SCROLL event causes the hypermedia browser to load and render a new document in the usual way. The recording of the annotation, including the audio recording and the clock, pauses while the new document is loading, and resumes when the loading is completed. This allows multiple documents to be annotated within the same annotation. As the clock is paused during loading, times for all events are stored independent of the loading time of the various documents accessed. For example, if the user causes a MOUSE_MOVE event, the timestamp for this event would be the number of milliseconds since the annotation began, minus any time spent downloading.

Another novel feature of the dynamic annotation authoring component is the capability to create hyperlinks to existing annotations. The user creates a hyperlink by clicking on the target annotation identifier (marked H in Figure 2) in the annotation manager box (marked G in Figure 2) both of which are described in the next section. The hyperlink is stored as an event with event_name ANNOTATION_LINK, a time, and one parameter giving the identifier of the target annotation.

In order to allow the user to access the features of the dynamic annotation authoring system from within the hypermedia browser, two user-interface objects were added to the traditional browser interface. These are:
- a browser-mode box with three buttons: browse, annotate and watch (A,B, and C in Figure 2)
- an annotation-mode box with two buttons: scribble and text (D and E in Figure 2)

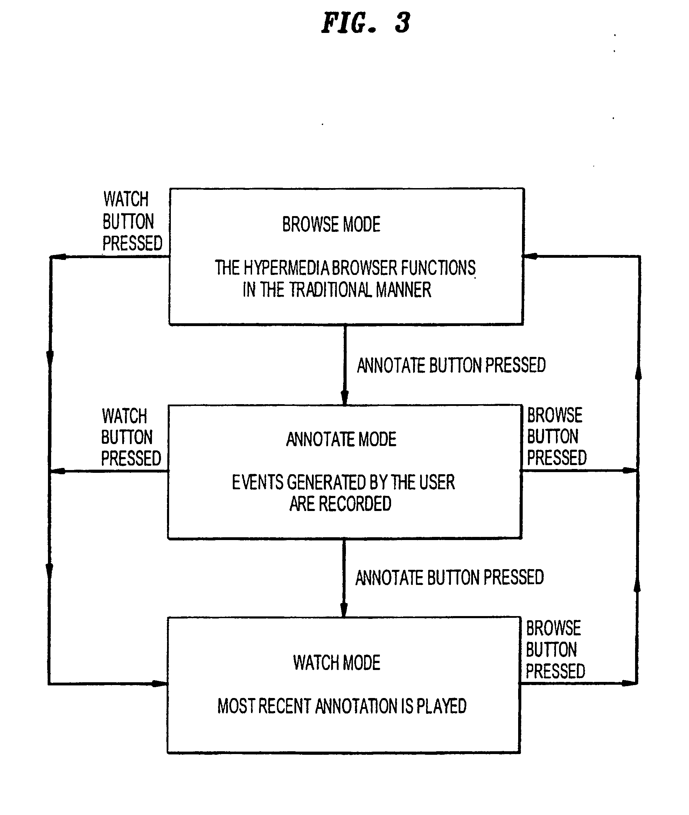

A mode box is a collection of options, only one of which can be valid at a time. Figure 3 shows the flow of control of the hypermedia browser as determined by the two new mode boxes. The browser-mode is normally *Browse,* in which case the annotation-mode box is disabled (shown). In Browse mode, the normal WWW operations are in effect. Clicking on the annotate button switches the browser-mode to *Annotate.* In this mode (see Figure 4), events (including the navigation events listed in the previous section) are captured and stored as in the afore-mentioned U.S. Patent No. 5,838,313, depending on the annotation-mode. The annotation-mode box is enabled. Clicking on the text button sets the annotation mode to *Text,* and clicking on the scribble button sets the annotation-mode to *Scribble.* In both annotation-modes, mouse events are captured. In the *Scribble* mode, MOUSE_MOVE events following a MOUSE_DOWN event, but preceding the next MOUSE_UP event cause a line to be drawn.

In *Text* mode, no lines are drawn, and MOUSE_DOWN events are used to fix the X,Y coordinates for TYPE events. The first TYPE event receives the X,Y coordinates of the last MOUSE_DOWN event, and successive TYPE events receive the same Y coordinate and an incremented X coordinate appropriate for the font size.

As shown in Figure 3, clicking on the browse button returns the browser to *Browse* mode, and ends the annotation. Clicking on the watch button switches the browser to *Watch* mode in which the current annotation is replayed, as described in section "A Means for Playing Dynamic Annotations of Hypermedia.''

A second principal component of the invention is a system for distributing annotations. This system includes elements within the hypermedia browser, called the annotation manager, and elements at a remote server, called the annotation server. In general, the system allows the user to store annotations at the annotation server. When another user accesses the same hypermedia document, the browser checks the server for any annotations on that document. If there are, these annotations are made available to the new user for viewing.

In order to allow the user to access the features of the dynamic annotation distribution system from within the hypermedia browser two user-interface objects were added to the traditional browser interface:
- a save button (labeled F in Figure 2)
- an annotation manager box (labeled G in Figure 2), which contains annotation identifiers (labeled H in Figure 2).

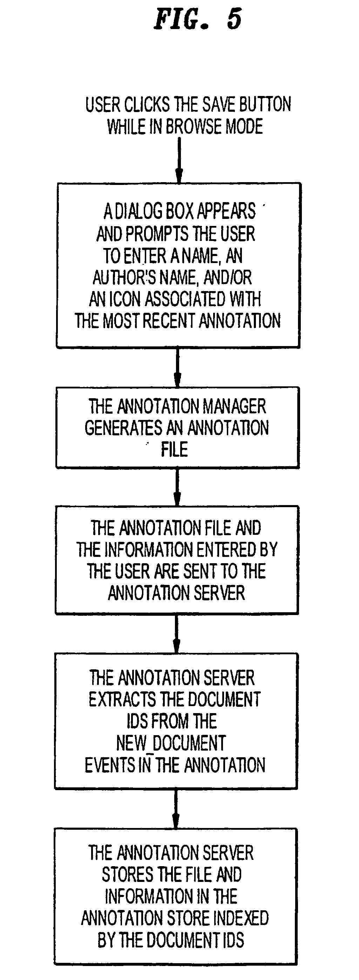

After having authored an annotation and having returned to *Browse* mode, the user has the option of storing it on the annotation server. User interface element F is the save button. As shown in Figure 5, pressing the save button invokes a dialog box of the traditional kind, which allows the user to enter a name for the annotation and their own name. Once a name is entered, the annotation is written to the local disk as an annotation file, as described in the afore-mentioned U.S. Patent No. 5,838,313. The file is then transferred to the annotation server through the use of FTP or a comparable file transfer protocol, along with its name and/or the name of the author. An optional feature is that the annotation manager generates a visual icon representing the annotation, and sends that to the annotation server as well.

At the annotation server, the annotation file is stored in the annotation store. The annotation store can be any kind of traditional database. The annotation file entry is indexed by the unique ID of each document included within the annotation. These IDs can be extracted directly from the NEW_DOCUMENT events in the annotation file.

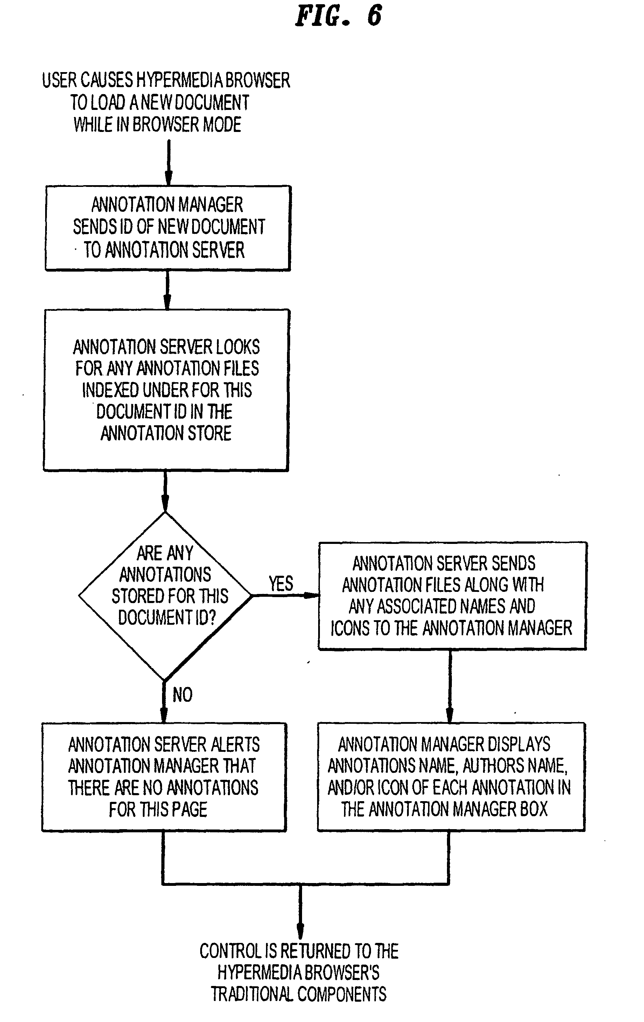

As shown in Figure 6, each time a user accesses a document using the hypermedia browser, the annotation manager queries the annotation server using the ID of the document. If any annotations are stored in the annotation store which have been indexed with that ID, the names of these annotations, their authors, and their icons if available, are returned to the annotation manager. These names and icons are then displayed to the user in the annotation manager box, which is user interface element G, each separately, as shown in user interface element H. The user is thus made aware of any annotations which may be available for this document.

There are many protocols for restricting a user's rights to viewing annotations, each of which may be useful in different situations. Such protocols and will not be particularly described herein, in that the present invention is compatible with a number of possible choices of access protocol.

While the invention disclosed in the afore-mentioned U.S. Patent No. 5,838,313 allows the user to play dynamic annotations on electronic documents; the present invention enables the playing of annotations within a program for browsing hypermedia, and extends operation with three new features: the capability to play annotations over multiple documents, an enhanced synchronization system to handle arbitrary document loading times, and a means for displaying temporal hyperlinks to other annotations.

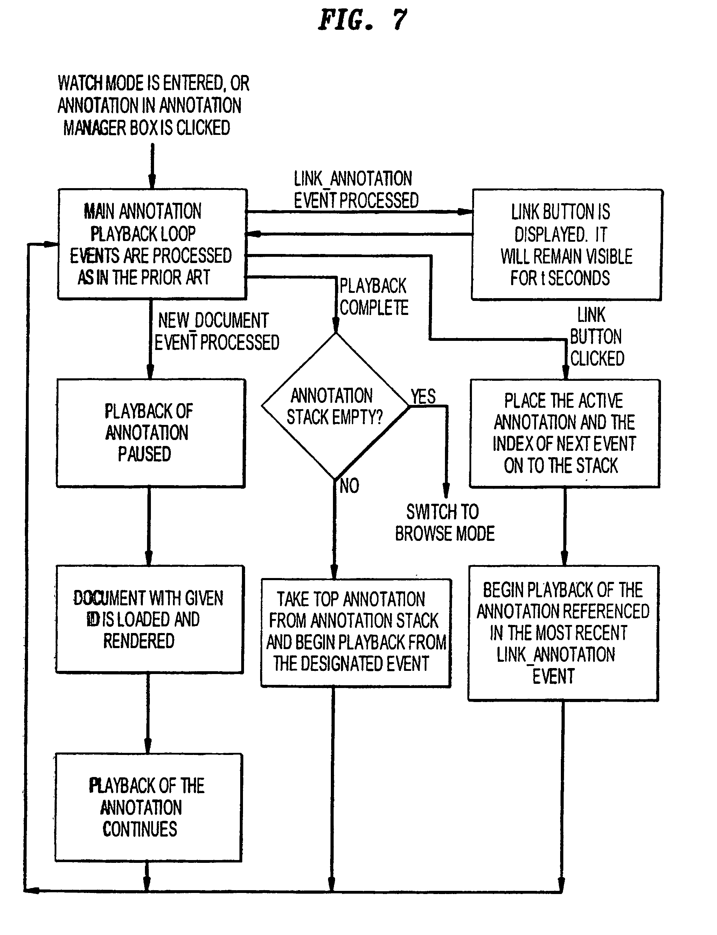

The user of the system can play previously recorded annotations by clicking on any of the annotations listed in the annotation manager box described previously. In addition, an annotation author can view the annotation he has just made by switching the browser into *Watch* mode, as shown in Figure 3. The operation of the system during playback is shown in Figure 7.

As described in the afore-mentioned U.S. Patent No. 5,838,313, annotations are played by processing each event that has been stored, in turn, while maintaining the timing as much as possible. In the case of NEW_DOCUMENT events, the ID of the document is passed to the traditional browser modules for loading and rendering. Any subsequent events, such as drawing of lines or mouse gestures, are displayed on the new document. In this way, annotations over multiple documents can be played.

A difficulty posed by multiple-document annotation, as opposed to single document annotation, is that the time required to load and render a new document is not consistent from recording to playback, or even from one playback to another.

This is particularly true with WWW documents, for which the loading time can vary substantially. At playback time, this can cause the recorded audio and events, which are on an absolute timeline, to become unsynchronized with the associated document. In the present invention, this problem is solved by pausing both the recording and playback of annotations during the loading and rendering of new documents. Specifically, when a NEW_DOCUMENT event is processed in *Watch* mode, playback is paused until the browser notifies the playback module that loading and rendering are complete. Further, the timestamps of all events are stored and interpreted relative to the completion of the loading of the most recent document. In this way, arbitrary loading times can be tolerated with no loss of synchronization.

As described previously, the present invention allows annotation authors to create hyperlinks to existing annotations. These are stored as ANNOTATION_LINK events. During playback, ANNOTATION_LINK events are interpreted by causing a special "link button" to appear on the browser temporarily. In the described exemplary embodiment, the link button appears initially bright red, and then slowly fades to white over a period of seconds. Empirical tests show that five seconds is an appropriate value for t. After the link button becomes completely white, it is removed. While the link button is visible, the user may click on it. Clicking on the link causes the playback of the current annotation to pause, and playing to begin of the target annotation, that is, the annotation with the ID stored in the ANNOTATION_LINK event. When the target annotation concludes, the playback of the previous annotation resumes at the event where it left off.

As there may be several annotation hyperlinks followed during a single playback session, a stack is required to maintain the state of the playback. Whenever the link button is clicked, the current annotation, and the index of the next event in the annotation, are placed on the stack. Whenever an annotation concludes, the stack is checked to see if there are any outstanding annotations to resume. If the stack is empty, the playback is finished; otherwise the annotation on the top of the stack is removed, and playback resumes with that annotation.

While the invention has been described by way of exemplary embodiments, it will be understood by one of skill in the art to which it pertains that various changes and modifications may be made to the invention without departing from the scope of the invention as claimed and that such changes and modifications are intended to be covered by the claims following.

## Claims

1. A system for authoring, distributing, and replaying derivative hypermedia content, said system comprising:
an authoring system for recording dynamic annotations comprising hypermedia browser navigation events authored on an electronic document;
a distribution system for distributing said dynamic annotations which have been recorded by the authoring system; and
a playing system for playing said dynamic annotations which have been distributed by the distribution system on said electronic document.

2. A system for authoring, distributing, and replaying derivative hypermedia content in accordance with claim 1, wherein said hypermedia browser navigation events comprise one or more of: following a hyperlink; invoking "forward", "back", "refresh" or "home" browser commands; jumping to a document through the use of a history list; jumping to a document by invoking a "bookmark"; and scrolling the document.

3. A system for authoring, distributing, and replaying derivative hypermedia content in accordance with claim 1 or 2 wherein the authoring system is arranged to record a timestamp of a hypermedia browser navigation event.

4. A system according to claim 3 wherein the time stamp is independent of the loading time of a document.

5. A system for authoring, distributing and replaying derivative hypermedia content in accordance with any of the preceding claims, wherein said dynamic annotations are recorded on hypermedia.

6. A system for authoring, distributing, and replaying derivative hypermedia content in accordance with claim 5, wherein hyperlinks may be created and followed between said dynamic annotations.

7. A system for authoring, distributing, and replaying derivative hypermedia content in accordance with claim 6, including a hypermedia browser, said authoring and playing systems being included in said hypermedia browser and said distribution system being in part comprised in said hypermedia browser.

8. A system for authoring, distributing, and replaying derivative hypermedia content in accordance with claim 7, wherein said distribution system is partly comprised within said hypermedia browser and partly within a remote annotation server.

9. A system for authoring, distributing, and replaying derivative hypermedia content in accordance with any of the preceding claims, wherein said distribution system includes a remote annotation server.

10. A system for authoring, distributing and replaying derivative hypermedia content in accordance with claim 8 or 9, wherein said remote annotation server further comprises an annotation store, and a mechanism for indexing, retrieving and transferring annotation files.

11. A system according to any of the preceding claims, being for use with a communications web or net, said net comprising at least one of the Internet and an Intranet, wherein the system includes:
an annotation server couplable to said communications net;
a remote net server couplable to said communications web; and
a net browser couplable to said communications web.

12. A system in accordance with claim 11, wherein said net browser comprises:
a system for capturing said navigation events.

13. A system in accordance with claim 11 or 12, wherein said annotation server comprises an annotation store.

14. A system in accordance with claim 11, 12 or 13, wherein said net browser comprises traditional hypermedia browser components, an annotation manager, an annotation recorder, and an annotation player.

15. A system in accordance with any of claims 11 to 14, wherein said system has a selectable Browse operating mode wherein said net browser functions in a traditional hypermedia browser manner, an Annotate mode wherein events generated by a user are recorded, and a Watch mode wherein a most recent annotation is played.

16. A system in accordance with any of claims 11 to 15, wherein said system displays available annotations for each document that a user visits.

17. A method of authoring, distributing and replaying derivative hypermedia content, the method comprising:
recording dynamic annotations comprising hypermedia browser navigation events authored on an electronic document;
distributing said dynamic annotations which have been recorded in the recording step; and
playing said dynamic annotations which have been distributed in said distributing step on said electronic document

18. A method according to claim 17, being for use with a communications web or net, said net comprising at least one of the Internet and an Intranet, wherein said method further comprises:
coupling each of at least one remote server, an annotation server, an annotation manager, and a net browser to said communications net; and
selecting one of a Browse mode, an Annotate mode, and a Watch mode for respectively causing said net browser to function in a traditional hypermedia browser manner, causing events generated by a user to be recorded, and causing a most recent annotation to be displayed.

19. A method in accordance with claim 18, wherein said causing events generated by a user to be recorded includes causing said navigation events to be recorded.

20. A method in accordance with claim 18 or 19, wherein said causing a most recent annotation to be displayed includes causing said navigation events to be displayed.

21. A method in accordance with any of claims 18 to 20, wherein said Browse mode, said Annotate mode, and said Watch mode are selectable by screen button functions.

22. A method in accordance with any of claims 18 to 21, comprising the steps of, when said Annotate mode is selected for recording events, selecting one of a drawing mode and a typing mode.

23. A method in accordance with any of claims 18 to 22, comprising the step of, upon selection of an icon or text representing an annotation, generating a link annotation event using the annotation ID of said item selected.

24. A method in accordance with any of claims 18 to 23, comprising the steps of, when said Annotate mode is selected for recording events, and upon one of (a) selection of an item in an Annotation box, and (b) generation of a non-scroll navigation event:
pausing recording of annotation;
loading a document with given ID;
rendering said document by said net browser; and
resuming recording of annotation.

25. A method in accordance with any of claims 18 to 24, comprising the steps of, when said Browse mode is selected and upon activation of a save function:
entering information including a user-selected name associated with a most recent annotation;
generating an annotation file;
sending said name and said annotation file to said annotation server;
extracting document ID's from NEW_DOCUMENT events in said annotation; and
storing a file with said information in an Annotation Store indexed by said document ID's.

26. A method in accordance with claim 23, comprising the steps of, when said Browse mode is selected and upon execution of a non-scroll navigation event which causes a new document to be loaded by the browser;
said Annotation manager sending an ID of said new document to said Annotation server; upon said Annotation server finding any annotations stored for said ID of a new document, said Annotation server sending annotation files along with any associated names and icons to said Annotations Manager, said Annotation Manager displaying annotation's name, author's name if any, and icon if any, of each annotation in an Annotation Manager box.

27. A method in accordance with claim 25, comprising the steps of, when said Browse mode is selected, and upon execution of a non-scroll navigation event which causes a new document to be loaded by the browser:
said Annotation manager sending an ID of a new document to said Annotation server;
upon said Annotation server finding no annotation stored for said ID of a new document, said Annotation alerting said Annotation Manager that there are no annotations for a current page.

28. A method in accordance with any of claims 18 to 27, comprising the steps of, when said Watch mode is selected, processing events in a traditional manner in a Main Annotation Playback Loop.

29. A method in accordance with claim 28, comprising the steps of, when said Watch mode is selected, and upon processing of a non-scroll navigation event,
pausing playback of annotation;
loading a document having a selected ID;
rendering said document; and
continuing playback of said annotation.

30. A method in accordance with claim 29, comprising the steps of:
if said playback is complete, verifying whether an Annotation Stack is empty and, if so,
switching to said Browse mode and, if not, taking the top annotation from said stack and beginning playback from the designated event.

31. A method in accordance with claim 30, comprising the steps of, when said Watch mode is selected, and upon processing of a link annotation event,
creating a temporary Link Button which remains available to the user for a pre-detennined length of time.

32. A method in accordance with claim 31, comprising the steps of, when said Watch mode is selected, and upon activating said Link Button,
placing the ID of the active annotation, along with the index of the next event in the active annotation on the top of the stack;
beginning playback of an annotation referenced in the most recent link annotation event.

33. A method in accordance with claim 32, comprising the steps of:
if said playback is complete, verifying whether an Annotation Stack is empty and, if so, switching to said Browse mode and, if not, taking a top annotation from said stack and beginning playback from a designated event.

34. A method according to any of claims 18 to 33, wherein said hypermedia browser navigation events comprise one or more of: following a hyperlink; invoking "forward", "back", "refresh" or "home" browser commands; jumping to a document through the use of a history list; jumping to a document by invoking a "bookmark"; and scrolling the document.

35. A method according to any of claims 18 to 34, wherein the step of recording comprises recording a timestamp of a hypermedia browser navigation event.

36. A method according to claim 35, wherein the timestamp is independent of the loading time of a document.

## Patentansprüche

1. System zum Authoring, zur Verteilung und Wiedergabe von abgeleitetem Hypermedia-Inhalt, wobei das besagte System umfasst:
ein Authoring-System zum Aufzeichnen dynamischer Annotationen, welche Navigationsereignisse eines Hypermedia-Browsers umfassen, die auf einem elektronischen Dokument verfasst wurden;
ein Verteilungssystem zum Verteilen der besagten dynamischen Annotationen, welche von dem Authoring-System aufgezeichnet worden sind; und
ein Abspielsystem zum Abspielen der besagten dynamischen Annotationen, welche von dem Verteilungssystem auf dem besagten elektronischen Dokument verteilt worden sind.

2. System zum Authoring, zur Verteilung und Wiedergabe von abgeleitetem Hypermedia-Inhalt nach Anspruch 1, wobei die besagten Navigationsereignisse eines Hypermedia-Browsers eines oder mehrere der folgenden Ereignisse umfassen: Verfolgen eines Hyperlinks; Aufrufen der Browser-Befehle "Vorwärts", "Zurück", "Aktualisieren" oder "Home"; Springen zu einem Dokument durch die Verwendung einer History-Liste; Springen zu einem Dokument durch Aufrufen eines "Lesezeichens"; und Verschieben (Scrollen) des Dokuments.

3. System zum Authoring, zur Verteilung und Wiedergabe von abgeleitetem Hypermedia-Inhalt nach Anspruch 1 oder 2, wobei das Authoring-System so beschaffen ist, dass es eine Zeitmarke eines Navigationsereignisses eines Hypermedia-Browsers aufzeichnet.

4. System nach Anspruch 3, wobei die Zeitmarke unabhängig von der Ladezeit eines Dokuments ist.

5. System zum Authoring, zur Verteilung und Wiedergabe von abgeleitetem Hypermedia-Inhalt nach einem der vorhergehenden Ansprüche, wobei die besagten dynamischen Annotationen auf Hypermedia aufgezeichnet werden.

6. System zum Authoring, zur Verteilung und Wiedergabe von abgeleitetem Hypermedia-Inhalt nach Anspruch 5, wobei zwischen den besagten dynamischen Annotationen Hyperlinks erzeugt und verfolgt werden können.

7. System zum Authoring, zur Verteilung und Wiedergabe von abgeleitetem Hypermedia-Inhalt nach Anspruch 6, welches einen Hypermedia-Browser enthält, wobei das besagte Authoring-System und das besagte Abspielsystem in dem besagten Hypermedia-Browser enthalten sind und das besagte Verteilungssystem teilweise in dem besagten Hypermedia-Browser enthalten ist.

8. System zum Authoring, zur Verteilung und Wiedergabe von abgeleitetem Hypermedia-Inhalt nach Anspruch 7, wobei das besagte Verteilungssystem teilweise in dem besagten Hypermedia-Browser und teilweise in einem entfernten Annotationsserver enthalten ist.

9. System zum Authoring, zur Verteilung und Wiedergabe von abgeleitetem Hypermedia-Inhalt nach einem der vorhergehenden Ansprüche, wobei das besagte Verteilungssystem einen entfernten Annotationsserver umfasst.

10. System zum Authoring, zur Verteilung und Wiedergabe von abgeleitetem Hypermedia-Inhalt nach Anspruch 8 oder 9, wobei der besagte entfernte Annotationsserver ferner einen Annotationsspeicher und einen Mechanismus zum Indizieren, Abrufen und Übertragen von Annotationsdateien umfasst.

11. System nach einem der vorhergehenden Ansprüche, das zur Verwendung in Verbindung mit einem Kommunikationsnetz bestimmt ist, wobei es sich bei dem besagten Netz um das Internet und/oder ein Intranet handelt, wobei das System umfasst:
einen Annotationsserver, der an das besagte Kommunikationsnetz gekoppelt werden kann;
einen entfernten Netzserver, der an das besagte Kommunikationsnetz gekoppelt werden kann; und
einen Netzbrowser, der an das besagte Kommunikationsnetz gekoppelt werden kann.

12. System nach Anspruch 11, wobei der besagte Netzbrowser ein System zum Erfassen der besagten Navigationsereignisse umfasst.

13. System nach Anspruch 11 oder 12, wobei der besagte Annotationsserver einen Annotationsspeicher umfasst.

14. System nach Anspruch 11, 12 oder 13, wobei der besagte Netzbrowser herkömmliche Komponenten von Hypermedia-Browsern, einen Annotationsmanager, einen Annotations-Aufzeichner und einen Annotations-Abspieler umfasst.

15. System nach einem der Ansprüche 11 bis 14, wobei das besagte System einen wählbaren Betriebsmodus "Browsen", in dem der besagte Netzbrowser auf eine Weise wie ein herkömmlicher Hypermedia-Browser funktioniert, einen Modus "Annotieren", in dem von einem Benutzer erzeugte Ereignisse aufgezeichnet werden, und einen Modus "Anschauen", in dem eine zuletzt erzeugte Annotation abgespielt wird, aufweist.

16. System nach einem der Ansprüche 11 bis 15, wobei das besagte System für jedes Dokument, welches ein Benutzer besucht, verfügbare Annotationen anzeigt.

17. Verfahren zum Authoring, zur Verteilung und Wiedergabe von abgeleitetem Hypermedia-Inhalt, wobei das Verfahren umfasst:
Aufzeichnen dynamischer Annotationen, welche Navigationsereignisse eines Hypermedia-Browsers umfassen, die auf einem elektronischen Dokument verfasst wurden;
Verteilen der besagten dynamischen Annotationen, welche in dem Schritt des Aufzeichnens aufgezeichnet worden sind; und
Abspielen der besagten dynamischen Annotationen, welche in dem besagten Schritt des Verteilens auf dem besagten elektronischen Dokument verteilt worden sind.

18. Verfahren nach Anspruch 17, das zur Verwendung in Verbindung mit einem Kommunikationsnetz bestimmt ist, wobei es sich bei dem besagten Netz um das Internet und/oder ein Intranet handelt, wobei das besagte Verfahren ferner umfasst:
Koppeln von jeweils wenigstens einem entfernten Server, einem Annotationsserver, einem Annotationsmanager und einem Netzbrowser an das besagte Kommunikationsnetz; und
Wählen eines der Modi "Browsen", "Annotieren" oder "Anschauen", um zu bewirken, dass der besagte Netzbrowser auf eine Weise wie ein herkömmlicher Hypermedia-Browser funktioniert, bzw. um zu bewirken, dass von einem Benutzer erzeugte Ereignisse aufgezeichnet werden, bzw. um zu bewirken, dass eine zuletzt erzeugte Annotation angezeigt wird.

19. Verfahren nach Anspruch 18, wobei das besagte Bewirken, dass von einem Benutzer erzeugte Ereignisse aufgezeichnet werden, beinhaltet zu bewirken, dass die besagten Navigationsereignisse aufgezeichnet werden.

20. Verfahren nach Anspruch 18 oder 19, wobei das besagte Bewirken, dass eine zuletzt erzeugte Annotation angezeigt wird, beinhaltet zu bewirken, dass die besagten Navigationsereignisse angezeigt werden.

21. Verfahren nach einem der Ansprüche 18 bis 20, wobei der besagte Modus "Browsen", der besagte Modus "Annotieren" und der besagte Modus "Anschauen" mittels Bildschirmschaltflächen-Funktionen wählbar sind.

22. Verfahren nach einem der Ansprüche 18 bis 21, welches den folgenden Schritt umfasst, wenn der besagte Modus "Annotieren" zum Aufzeichnen von Ereignissen gewählt ist: Wählen entweder eines Modus "Zeichnen" oder eines Modus "Tastatureingabe".

23. Verfahren nach einem der Ansprüche 18 bis 22, welches den folgenden Schritt umfasst, bei Wahl eines grafischen Symbols oder eines Textes, das bzw. der eine Annotation repräsentiert: Erzeugen eines Ereignisses "Annotationslink" unter Verwendung der Annotations-Kennung des besagten gewählten Elements.

24. Verfahren nach einem der Ansprüche 18 bis 23, welches die folgenden Schritte umfasst, wenn der besagte Modus "Annotieren" zum Aufzeichnen von Ereignissen gewählt ist und entweder (a) die Wahl eines Elements in einem Annotationsfeld oder (b) die Erzeugung eines Navigationsereignisses, bei dem es sich nicht um ein Verschiebungs-Ereignis (Scroll-Ereignis) handelt, erfolgt:
Unterbrechen des Aufzeichnens der Annotation;
Laden eines Dokuments mit gegebener Kennung;
Rendern des besagten Dokuments mittels des besagten Netzbrowsers; und
Fortsetzen des Aufzeichnens der Annotation.

25. Verfahren nach einem der Ansprüche 18 bis 24, welches die folgenden Schritte umfasst, wenn der besagte Modus "Browsen" gewählt ist und eine Funktion "Speichern" aktiviert wird:
Eingeben von Informationen, die einen vom Benutzer gewählten Namen umfassen, der mit einer zuletzt erzeugten Annotation verknüpft ist;
Erzeugen einer Annotationsdatei;
Senden des besagten Namens und der besagten Annotationsdatei zu dem besagten Annotationsserver;
Entnehmen von Dokumentkennungen aus den Ereignissen NEW_DOCUMENT in der besagten Annotation; und
Speichern einer Datei mit den besagten Informationen in einem Annotationsspeicher, der mittels der besagten Dokumentkennungen indiziert ist.

26. Verfahren nach Anspruch 23, welches die folgenden Schritte umfasst, wenn der besagte Modus "Browsen" gewählt ist und ein Navigationsereignis ausgeführt wird, bei dem es sich nicht um ein Verschiebungs-Ereignis (Scroll-Ereignis) handelt und das bewirkt, dass ein neues Dokument durch den Browser geladen wird:
Der besagte Annotationsmanager sendet eine Kennung des besagten neuen Dokuments zu dem besagten Annotationsserver; wenn der besagte Annotationsserver irgendwelche Annotationen findet, die für die besagte Kennung eines neuen Dokuments gespeichert sind, sendet der besagte Annotationsserver Annotationsdateien zusammen mit eventuell damit verknüpften Namen und grafischen Symbolen an den besagten Annotationsmanager; der besagte Annotationsmanager zeigt für jede Annotation den Namen der Annotation, gegebenenfalls den Namen des Autors und gegebenenfalls das grafische Symbol in einem. Feld "Annotationsmanager" an.

27. Verfahren nach Anspruch 25, welches die folgenden Schritte umfasst, wenn der besagte Modus "Browsen" gewählt ist und ein Navigationsereignis ausgeführt wird, bei dem es sich nicht um ein Verschiebungs-Ereignis (Scroll-Ereignis) handelt und das bewirkt, dass ein neues Dokument durch den Browser geladen wird:
Der besagte Annotationsmanager sendet eine Kennung eines neuen Dokuments zu dem besagten Annotationsserver;
wenn der besagte Annotationsserver keine Annotation findet, die für die besagte Kennung eines neuen Dokuments gespeichert ist, informiert der besagte Annotationsserver den besagten Annotationsmanager darüber, dass für eine aktuelle Seite keine Annotationen vorhanden sind.

28. Verfahren nach einem der Ansprüche 18 bis 27, welches die folgenden Schritte umfasst, wenn der besagte Modus "Anschauen" gewählt ist: Verarbeiten von Ereignissen auf eine herkömmliche Weise in der Annotationswiedergabe-Hauptschleife.

29. Verfahren nach Anspruch 28, welches die folgenden Schritte umfasst, wenn der besagte Modus "Anschauen" gewählt ist und ein Navigationsereignis verarbeitet wird, bei dem es sich nicht um ein Verschiebungs-Ereignis (Scroll-Ereignis) handelt:
Unterbrechen der Wiedergabe der Annotation;
Laden eines Dokuments mit einer gewählten Kennung;
Rendern des besagten Dokuments; und
Fortsetzen der Wiedergabe der besagten Annotation.

30. Verfahren nach Anspruch 29, welches die folgenden Schritte umfasst:
Wenn die besagte Wiedergabe beendet ist, Überprüfen, ob ein Annotationsstapel leer ist, und wenn dies der Fall ist,
Umschalten in den besagten Modus "Browsen", und wenn er nicht leer ist, Entnehmen der oben befindlichen Annotation aus dem besagten Stapel und Beginnen der Wiedergabe ab dem bezeichneten Ereignis.

31. Verfahren nach Anspruch 30, welches die folgenden Schritte umfasst, wenn der besagte Modus "Anschauen" gewählt ist und ein Ereignis "Annotationslink" verarbeitet wird:
Erzeugen einer temporären Link-Schaltfläche, welche während eines vorgegebenen Zeitintervalls für den Benutzer verfügbar bleibt.

32. Verfahren nach Anspruch 31, welches die folgenden Schritte umfasst, wenn der besagte Modus "Anschauen" gewählt ist und die besagte Link-Schaltfläche aktiviert wird:
Ablegen der Kennung der aktiven Annotation zusammen mit dem Index des nächsten Ereignisses in der aktiven Annotation oben auf dem Stapel;
Beginnen der Wiedergabe einer Annotation, auf die in dem jüngsten Ereignis "Annotationslink" Bezug genommen wird.

33. Verfahren nach Anspruch 32, welches die folgenden Schritte umfasst:
Wenn die besagte Wiedergabe beendet ist, Überprüfen, ob der Annotationsstapel leer ist, und wenn dies der Fall ist, Umschalten in den besagten Modus "Browsen", und wenn er nicht leer ist, Entnehmen der oben befindlichen Annotation aus dem besagten Stapel und Beginnen der Wiedergabe ab dem bezeichneten Ereignis.

34. Verfahren nach einem der Ansprüche 18 bis 33, wobei die besagten Navigationsereignisse eines Hypermedia-Browsers eines oder mehrere der folgenden Ereignisse umfassen: Verfolgen eines Hyperlinks; Aufrufen der Browser-Befehle "Vorwärts", "Zurück", "Aktualisieren" oder "Home"; Springen zu einem Dokument durch die Verwendung einer History-Liste; Springen zu einem Dokument durch Aufrufen eines "Lesezeichens"; und Verschieben (Scrollen) des Dokuments.

35. Verfahren nach einem der Ansprüche 18 bis 34, wobei der Schritt des Aufzeichnens das Aufzeichnen einer Zeitmarke eines Navigationsereignisses eines Hypermedia-Browsers umfasst.

36. Verfahren nach Anspruch 35, wobei die Zeitmarke unabhängig von der Ladezeit eines Dokuments ist.

## Revendications

1. Système pour créer, distribuer et lire un contenu hypermédia dérivé, ledit système comprenant :
un système auteur pour enregistrer des annotations dynamiques comprenant des événements de navigation par navigateur hypermédia créées sur un document électronique ;
un système de distribution pour distribuer lesdites annotations dynamiques qui ont été enregistrées par le système auteur, et
un système de lecture pour lire lesdites annotations dynamiques qui ont été distribuées par le système de distribution sur ledit document électronique.

2. Système pour créer, distribuer et lire un contenu hypermédia dérivé selon la revendication 1, dans lequel lesdits événements de navigation par navigateur hypermédia sont constitués par un ou plusieurs des événements suivants : suivre un hyperlien ; appeler les commandes de navigateur « suivant », « précédent », « actualiser » ou « page d'accueil » ; passer à un document en utilisant une liste d'historique ; passer à un document en appelant un « signet », et faire défiler le document.

3. Système pour créer, distribuer et lire un contenu hypermédia dérivé selon la revendication 1 ou 2, dans lequel le système auteur est adapté pour enregistrer une référence temporelle d'un événement de navigation par navigateur hypermédia.

4. Système selon la revendication 3 dans lequel la référence temporelle est indépendante du temps de chargement d'un document.

5. Système pour créer, distribuer et lire un contenu hypermédia dérivé selon l'une quelconque des revendications précédentes, dans lequel lesdites annotations dynamiques sont enregistrées sur hypermédia.

6. Système pour créer, distribuer et lire un contenu hypermédia dérivé selon la revendication 5, dans lequel des hyperliens peuvent être créés et suivis entre lesdites annotations dynamiques.

7. Système pour créer, distribuer et lire un contenu hypermédia dérivé selon la revendication 6, comprenant un navigateur hypermédia, lesdits systèmes auteur et de lecture étant compris dans ledit navigateur hypermédia et ledit système de distribution étant en partie compris dans ledit navigateur hypermédia.

8. Système pour créer, distribuer et lire un contenu hypermédia dérivé selon la revendication 7, dans lequel ledit système de distribution est compris en partie dans ledit navigateur hypermédia et en partie dans un serveur d'annotations distant.

9. Système pour créer, distribuer et lire un contenu hypermédia dérivé selon l'une quelconque des revendications précédentes, dans lequel ledit système de distribution comprend un serveur d'annotations distant.

10. Système pour créer, distribuer et lire un contenu hypermédia dérivé selon la revendication 8 ou 9, dans lequel ledit serveur d'annotations distant comprend par ailleurs une mémoire d'annotations et un mécanisme pour indexer, récupérer et transférer des fichiers d'annotation.

11. Système selon l'une quelconque des revendications précédentes, à utiliser avec une toile ou un réseau de communication, ledit réseau étant constitué par au moins soit l'Internet, soit un Intranet, dans lequel le système comprend :
un serveur d'annotations connectable audit réseau de communication ;
un serveur de réseau distant connectable à ladite toile de communications, et
un navigateur de réseau connectable à ladite toile de communication.

12. Système selon la revendication 11, dans lequel ledit navigateur de réseau comprend : un système pour capturer lesdits événements de navigation.

13. Système selon la revendication 11 ou 12, dans lequel ledit serveur d'annotations comprend une mémoire d'annotations.

14. Système selon la revendication 11, 12 ou 13, dans lequel ledit navigateur de réseau est constitué de composants traditionnels de navigateur hypermédia, d'un gestionnaire d'annotations, d'un enregistreur d'annotations et d'un lecteur d'annotations.

15. Système selon l'une quelconque des revendications 11 à 14, dans lequel ledit système comporte un mode d'exploitation Naviguer sélectionnable dans lequel ledit navigateur de réseau fonctionne d'une manière propre à un navigateur hypermédia traditionnel, un mode Annoter dans lequel des événements produits par un utilisateur sont enregistrés et un mode Attendre dans lequel une annotation la plus récente est lue.

16. Système selon l'une quelconque des revendications 11 à 15, dans lequel ledit système affiche les annotations disponibles pour chaque document qu'un utilisateur visite.

17. Procédé de création, distribution et lecture d'un contenu hypermédia dérivé, le procédé comprenant :
l'enregistrement d'annotations dynamiques comprenant des événements de navigation par navigateur hypermédia créées sur un document électronique ;
la distribution desdites annotations dynamiques qui ont été enregistrées à l'étape d'enregistrement, et
la lecture desdites annotations dynamiques qui ont été distribuées à ladite étape de distribution sur ledit document électronique.

18. Procédé selon la revendication 17, à utiliser avec une toile ou un réseau de communication, ledit réseau étant constitué par au moins soit l'Internet, soit un Intranet, dans lequel ledit procédé comprend par ailleurs :
le couplage de chaque au moins un serveur distant, un serveur d'annotations, un gestionnaire d'annotations et un navigateur de réseau audit réseau de communication, et
la sélection soit d'un mode Naviguer, soit d'un mode Annoter, soit d'un mode Attendre pour faire en sorte respectivement que ledit navigateur de réseau fonctionne d'une manière propre à un navigateur hypermédia traditionnel, que des événements produits par un utilisateur soient enregistrés et qu'une annotation la plus récente soit affichée.

19. Procédé selon la revendication 18, dans lequel ledit fait de faire en sorte que des événements produits par un utilisateur soient enregistrés est constitué par le fait de faire en sorte que lesdits événements de navigation soient enregistrés.

20. Procédé selon la revendication 18 ou 19, dans lequel ledit fait de faire en sorte qu'une annotation la plus récente soit affichée est constitué par le fait de faire en sorte que lesdits événements de navigation soient affichés.

21. Procédé selon l'une quelconque des revendications 18 à 20, dans lequel ledit mode Naviguer, ledit mode Annoter et ledit mode Attendre sont sélectionnables par des fonctions de bouton d'écran.

22. Procédé selon l'une quelconque des revendications 18 à 21, comprenant les étapes consistant, lorsque ledit mode Annoter est sélectionné pour enregistrer des événements, à sélectionner soit un mode dessin, soit un mode frappe.

23. Procédé selon l'une quelconque des revendications 18 à 22, comprenant l'étape consistant, lors de la sélection d'une icône ou d'un texte représentant une annotation, à produire un événement formant lien avec l'annotation en utilisant l'ID d'annotation dudit élément sélectionné.

24. Procédé selon l'une quelconque des revendications 18 à 23, comprenant les étapes consistant, lorsque ledit mode Annoter est sélectionné pour enregistrer des événements, et lors de soit (a) la sélection d'un élément dans une boîte Annotation, soit (b) la production d'un événement de navigation ne formant pas défilement :
à arrêter l'enregistrement de l'annotation ;
à charger un document ayant un ID donné ;
à restituer ledit document au moyen dudit navigateur de réseau, et
à reprendre l'enregistrement de l'annotation.

25. Procédé selon l'une quelconque des revendications 18 à 24, comprenant les étapes consistant, lorsque ledit mode Naviguer est sélectionné et lors de l'activation d'une fonction de sauvegarde :
à entrer des informations comprenant un nom sélectionné par l'utilisateur, associé à une annotation la plus récente ;
à produire un fichier d'annotation ;
à envoyer ledit nom et ledit fichier d'annotation audit serveur d'annotations ;
à extraire les ID de document des événements NOUVEAU_DOCUMENT dans ladite annotation, et
à mémoriser un fichier contenant lesdites informations dans une mémoire d'annotations indexée par lesdits ID de document.

26. Procédé selon la revendication 23, comprenant les étapes consistant, lorsque ledit mode Naviguer est sélectionné et lors de l'exécution d'un événement de navigation ne formant pas défilement qui entraîne le chargement d'un nouveau document par le navigateur :
en ce que ledit gestionnaire d'annotations envoie un ID dudit nouveau document audit serveur d'annotations ; lorsque ledit serveur d'annotations trouve des annotations mémorisées pour ledit ID de nouveau document, ledit serveur d'annotations envoie les fichiers d'annotation avec les noms et icônes associés au gestionnaire d'annotations, ledit gestionnaire d'annotations affiche le nom d'annotation, le nom de l'auteur, s'il y en a un, et l'icône, s'il y en a une, de chaque annotation dans une boîte de gestionnaire d'annotations.

27. Procédé selon la revendication 25, comprenant les étapes consistant en ce que, lorsque ledit mode Naviguer est sélectionné et lors de l'exécution d'un événement de navigation ne formant pas défilement qui entraîne le chargement d'un nouveau document par le navigateur:
ledit gestionnaire d'annotations envoie un ID de nouveau document audit serveur d'annotations ;
lorsque ledit serveur d'annotations ne trouve pas d'annotation mémorisée pour ledit ID de nouveau document, ledit serveur d'annotations avertit ledit gestionnaire d'annotations qu'il n'y a pas d'annotations pour une page en cours.

28. Procédé selon l'une quelconque des revendications 18 à 27, comprenant les étapes consistant, lorsque ledit mode Attendre est sélectionné, à traiter les événements de manière traditionnelle dans une boucle de lecture d'annotation principale.

29. Procédé selon la revendication 28, comprenant les étapes consistant, lorsque ledit mode Attendre est sélectionné et lors du traitement d'un événement de navigation ne formant pas défilement :
à arrêter la lecture de l'annotation ;
à charger un document comportant un ID sélectionné ;
à restituer ledit document, et
à continuer la lecture de ladite annotation.

30. Procédé selon la revendication 29, comprenant les étapes consistant :
si ladite lecture est terminée, à vérifier si une pile d'annotations est vide et, si oui,
à commuter en mode Naviguer et, si non, à prendre l'annotation au sommet de ladite pile et à commencer la lecture à partir de l'événement désigné.

31. Procédé selon la revendication 30, comprenant les étapes consistant, lorsque ledit mode Attendre est sélectionné et lors du traitement d'un événement formant lien avec une annotation :
à créer un bouton formant lien temporaire qui reste à la disposition de l'utilisateur pendant une période de temps prédéterminée.

32. Procédé selon la revendication 31, comprenant les étapes consistant, lorsque ledit mode Attendre est sélectionné et lors de l'activation dudit bouton formant lien :
à placer l'ID de l'annotation active, ainsi que l'index de l'événement suivant dans l'annotation active au sommet de la pile ;
à commencer la lecture d'une annotation référencée dans l'événement le plus récent formant lien avec une annotation.

33. Procédé selon la revendication 32, comprenant les étapes consistant :
si ladite lecture est terminée, à vérifier si une pile d'annotations est vide et, si oui, à commuter en mode Naviguer et, si non, à prendre une annotation au sommet de ladite pile et à commencer la lecture à partir d'un événement désigné.

34. Procédé selon l'une quelconque des revendications 18 à 33, dans lequel lesdits événements de navigation par navigateur hypermédia sont constitués par l'un ou plusieurs des événements suivants :
suivre un hyperlien ; appeler les commandes de navigateur « suivant », « précédent », « actualiser » ou « page d'accueil » ; passer à un document en utilisant une liste d'historique ; passer à un document en appelant un « signet », et faire défiler le document.

35. Procédé selon l'une quelconque des revendications 18 à 34, dans lequel l'étape d'enregistrement comprend l'enregistrement d'une référence temporelle d'un événement de navigation par navigateur hypermédia.

36. Procédé selon la revendication 35, dans lequel la référence temporelle est indépendante du temps de chargement d'un document.
